Europäisches Patentamt

European Patent Office

Office européen des brevets

(11) Publication number: **0 321 103**
**A2**

# EUROPEAN PATENT APPLICATION

(21) Application number: 88311065.2

(51) Int. Cl.4: **H04M 1/06**

(22) Date of filing: 23.11.88

(30) Priority: 18.12.87 GB 8729636

(43) Date of publication of application:
21.06.89 Bulletin 89/25

(84) Designated Contracting States:
**BE DE ES FR GR IT LU NL SE**

(71) Applicant: **GEC PLESSEY
TELECOMMUNICATIONS LIMITED
P.O. Box 53 Telephone Road
Coventry, CV3 1HJ(GB)**

(72) Inventor: **Langton, Carlton McDonald
34 Bodmin Drive
Aspley Nottingham NG8 5LG(GB)**
Inventor: **Tomlin, Russell Stephen
2 Goodwood Drive
Toton Beeston Nottingham, NG9 6HX(GB)**

(74) Representative: **Allen, Derek
The Plessey Company plc Intellectual
Property Department Vicarage Lane
Ilford Essex, IG1 4AQ(GB)**

(54) **A hook arrangement.**

(57) The hook arrangement comprises a body portion and a hook portion arranged to be rotatably mounted in an aperture of a housing. The arrangement can adopt a first position in which the hook portion is concealed within the housing and body portion closes the aperture. When the arrangement adopts a second position, the hook portion is external to the housing and the body portion closes the aperture.

The hook arrangement may be used in telecommunications apparatus to secure the handset of such apparatus.

## A HOOK ARRANGEMENT

The present invention relates to a hook arrangement arranged to be rotatably mounted in an aperture of a housing so that the arrangement can adopt a first and a second position.

The invention finds application in the environment of telecommunications in which a hook arrangement is often provided by means of which the handset of a telecommunications apparatus is provided to enable the handset to be secured when not in use.

In a known form of hook arrangement used in the telecommunications environment a housing is provided with a specially contoured aperture. The hook arrangement is rotatably mounted within the housing so that it can adopt a first and second position. When the hook is in the first position the hook is concealed within the housing however part of the aperture remains visible. When the hook arrangement is in the second position the hook is external to the housing however part of the aperture remains visible.

With this known form of hook arrangement the telecommunications apparatus in which it is mounted is left with part of the aperture open and is therefore not aesthetically pleasing.

A requirement of any telecommunications apparatus is that it should be of an appearance which is attractive to the user.

An aim of the present invention is to provide a hook arrangement which can adopt first and second positions in a housing and in either position the housing does not have any visible aperture which is visible and is therefore aesthetically pleasing.

According to the present invention there is provided a hook arrangement comprising a body portion and a hook portion arranged to be rotatably mounted in an aperture of a housing so that the arrangement can adopt a first position in which the hook portion is concealed within the housing and the body portion closes the aperture, and, a second position in which the hook portion is external to the housing and the body portion closes the aperture.

An embodiment of the present invention will now be described with reference to the accompanying drawings in which:-

Figure 1 shows a prior art hook arrangment in a first position,

Figure 2 shows a prior art hook arrangement in a second position,

Figure 3 shows a hook arrangement in a first position, according to the present invention, and

Figure 4 shows a hook arrangement in a second position, according to the present invention,

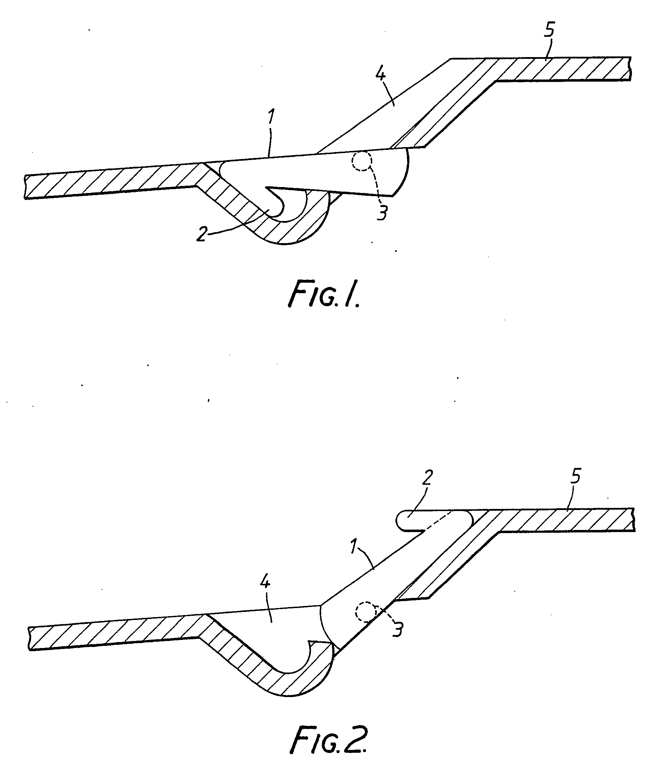

Referring to Figure 1 the hook arrangement comprises a body portion 1 and a hook portion 2 being rotatably mounted within a housing 5 about pivot 3. The housing is provided with an aperture 4. In the position shown in Figure 1 the hook portion 2 is concealed within the housing whilst the body portion 1 closes only part of the aperture 4. A large proportion of the aperture 4 remains visible. When the hook arrangement adopts the position shown in Figure 2 the hook portion 2 is now external to the housing 5 and the body portion 1 closes part of the aperture 4, and part of the aperture 4 remains visible.

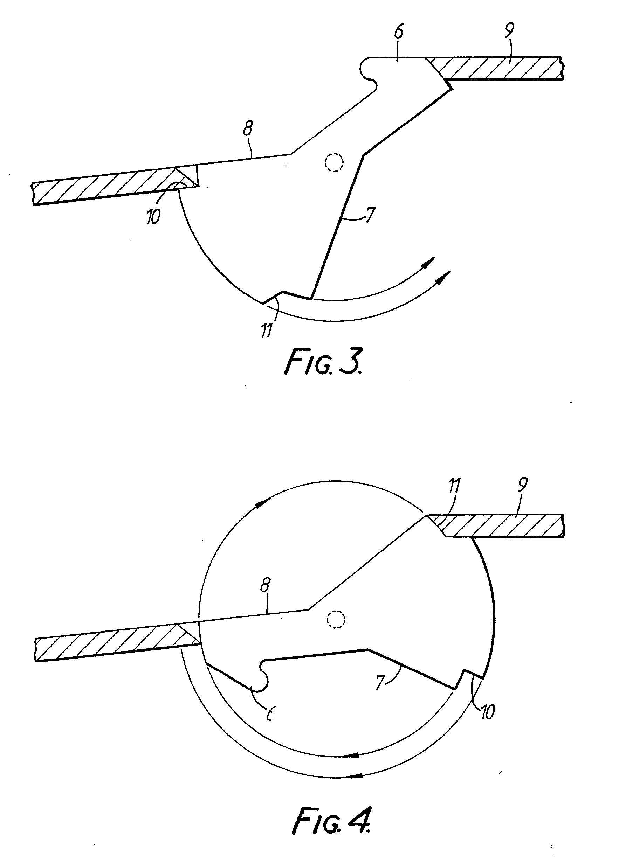

Referring to Figure 3, a hook arrangement according to the present invention is shown in which the hook arrangement is provided with a hook portion 6 and the body portion 7 rotatably mounted within an aperture 8 of a housing 9. The body portion 7 of the hook arrangement is provided with two recesses 10 and 11 the purpose of which is to limit the amount of rotation of the hook arrangement when it is rotated in a clockwise and anticlockwise direction respectively. When the hook arrangement adopts the position shown in Figure 3, the hook portion 6 is external to the housing and the recess 10 abuts with the housing 9. In this position the body portion 7 completely closes the aperture 8.

When the hook arrangement adopts the position shown in Figure 4, the hook portion 6 is concealed within the housing and the recess 11 abuts with the housing 9. The body portion 7 again closes the aperture 8.

The present invention finds utility in the area of telecommunications, and in particular the area of cordless telephones. Any cordless telephone is provided with a base station and a handset. It has been found convenient to provide a means of securing the handset when not in use. This may be done by returning the handset to the base station or alternatively the handset could be located on an intermediate device positioned elsewhere. When the base station or the intermediate device are desk mounted, the handset can merely rest upon the base station or intermediate device and does not need any means of securing the handset. In this case the hook arrangement according to the present invention may be provided in the base station or in the intermediate device, and under these circumstances the hook arrangement would adopt the position shown in Figure 4 where the hook is not required and the aperture 8 is conveniently closed to give an aesthetically pleasing appearance.

In the circumstances where the base station or intermediate device is wall mounted, the handset would not be securely mounted on the base station or the intermediate device and therefore the hook arrangement is required. Therefore the hook arrangement adopts the position shown in Figure 3 whereby the handset can be secured on the hook portion 6 whilst the body portion 7 closes the aperture 8 to give an aesthetically pleasing appearance.

It will be readily appreciated by those skilled in the art that the hook arrangement according to the present invention is not limited to the area of telecommunications and could be used in any apparatus in which the hook portion maybe required to be brought into use, and give the apparatus an aesthetically pleasing appearance.

## Claims

1. A hook arrangement comprising a body portion and a hook portion arranged to be rotatably mounted in an aperture of a housing so that the arrangement can adopt a first position in which the hook portion is concealed within the housing and the body portion closes the aperture, and, a second position in which the hook portion is external to the housing and the body portion closes the aperture.

2. A hook arrangement as claimed in claim 1 in which the body portion is provided with a first recess arranged to abut the housing and thereby determine the first position of the hook arrangement, and a second recess arranged to abut the housing and thereby determine the second position of the hook arrangement.

3. A hook arrangement as claimed in claim 2 in which the arrangement is mounted within the housing of a telecommunications apparatus.

4. A hook arrangement as claimed in claim 3 in which the hook arrangement adopts the first position when the telecommunications apparatus is wall mounted thereby giving a means by which the handset can be secured to the base station.

5. A hook arrangement as claimed in claim 4 in which the base station forms part of a cordless telephone.

6. A hook arrangment as claimed in claim 5 in which the hook arrangement is mounted within an intermediate device of a cordless telephone which is used to accommodate the handset when not in use.

*FIG. I.*

*FIG. 2.*

FIG. 3.

FIG. 4.